# EUROPEAN PATENT APPLICATION

(11) **EP 3 326 878 A1**
(43) Date of publication of application: **30.05.2018**
(21) Application number: 15898999.6
(22) Date of filing: 13.08.2015
(51) Int. Cl.: B60T 13/74, F16H 1/28

(54) **ACTUATOR ASSEMBLY FOR ELECTRONIC PARKING BRAKE**

(30) Priority: 21.07.2015 KR 20150102999
(71) Applicant: Keyang Electric Machinery Co., Ltd., Seoul 04526 (KR)
(72) Inventor: JANG, Soo-Gil, Ansan-si Gyeonggi-do 15578 (KR); LEE, Seong-Oh, Ansan-si Gyeonggi-do 15451 (KR)
(74) Representative: Botti, Mario
(86) International application number: PCT/KR2015/008515
(87) International publication number: WO 2017/014351

(57) **Abstract**

The present invention relates to an actuator assembly for an electronic parking brake having a multi-stage planetary gear mechanism. The present invention can provide an actuator assembly for an electronic parking brake, the multi-stage planetary gear mechanism comprising a center pin extending through through-holes of the entire planetary gear mechanism, a housing for supporting one end of the center pin, a plurality of planetary gear carriers spaced apart from each other on the axial direction of the center pin and each including a through-hole, a plurality of planetary gears inserted into a planetary gear shaft disposed radially around the through-hole on one side of the planetary gear carrier, and a sun gear of the planetary gear mechanism which is engaged with the planetary gear of next stage on the opposite side of one surface of the planetary gear carrier on which the plurality of planetary gears are disposed so that the planetary gear carrier can rotate, wherein the diameter of the through-holes is larger than the diameter of the center pin.

## Description

### [Technical Field]

The present disclosure relates to an actuator assembly for performing the operation of an electronic parking brake, and more particularly, to an actuator assembly for an electronic parking brake in which a planetary gear structure for preventing the output loss of the actuator is applied to realize a high-quality actuator assembly.

More specifically, the present disclosure relates to an actuator assembly for an electronic parking brake in which a center pin of a planetary gear mechanism is not integrally formed with a planetary gear carrier to prevent the output of the planetary gear mechanism from deviating in the axial direction of the center pin.

### [Background Art]

An actuator of an electronic parking brake of a vehicle includes a motor and a power transmission to operate friction pads installed at a caliper of a disc brake when parking.

For example, when a driver presses a parking brake switch, a rotary force of the motor of the actuator is transmitted to the input shaft of the caliper through the power transmission such as a reduction gear. The rotation of the input shaft allows a pressurizing junction sleeve to advance, and the advancing of the pressurizing junction sleeve allows a piston and a caliper housing having the pressurizing junction sleeve embedded therein to move closer to each other, so that two friction pads mounted on the piston and the caliper housing press both sides of the disc to restrain the rotation of the disc.

Korean Patent Publication No. 2011-0093061 discloses an example of the electronic parking brake actuator according to the conventional art.

The conventional actuator structure is such that a rotary force of a drive gear 1005 having received the power is transmitted to a first planetary gear 1001 placed in a first planetary gear unit 1002 through a sun gear integrally formed below. Furthermore, as the first planetary gear 1001 rotates, the first planetary gear unit 1002 rotates, and the rotary force of the first planetary gear unit 1002 is transmitted to a second planetary gear 1011 placed in a second planetary gear unit 1012 through a sun gear integrally formed below. Finally, as the second planetary gear 1011 rotates, the second planetary gear unit 1012 rotates, and the rotary force of the second planetary gear unit 1012 is transmitted to the final output shaft integrally formed below.

Furthermore, a housing 1004 having a ring gear on its inner circumference covers the first and second planetary gear units 1002, 1012, and the ring gear is engaged on the outer circumference of the first planetary gear 1001 and the second planetary gear 1011.

Meanwhile, at the center of the first planetary gear unit 1002 of the conventional actuator, a center pin 1003 passing through the drive gear 1005 and the first planetary gear unit 1002 and having the bottom supported on the second planetary gear unit 1012 is fixed to the first planetary gear unit 1002 in press-fit manner.

However, the first planetary gear unit 1002 has clearance in the circumferential direction, and when the center pin 1003 is fixed to the first planetary gear unit 1002 in press-fit manner, the overall alignment of the drive gear 1005 and the first and second planetary gear units 1002, 1012 in the circumferential direction of the first planetary gear unit 1002 is unstable, resulting in deviation of the center axis of the first planetary gear unit 1002.

Furthermore, because the sun gear of the drive gear 1005 to which power is inputted is engaged with the axis of the first planetary gear unit 1002, when the center axis of the first planetary gear unit 1002 deviates, the inputted power is not transmitted in alignment with the center axis, resulting in a loss of power finally transmitted to the output shaft of the second planetary gear unit 1012.

Accordingly, the traditional actuator structure has a risk that malfunction may occur due to deviation of the center axis during operation, hence causing a loss of the overall power transmission and noise.

### [Disclosure]

### [Technical Problem]

To solve this problem, the present disclosure is directed to providing an actuator assembly for an electronic parking brake in which a center pin is not fixed with the components of a planetary gear mechanism to prevent the deviation of the axis of the planetary gear mechanism.

Furthermore, the present disclosure is directed to providing an actuator assembly for an electronic parking brake in which the axial direction alignment of a planetary gear mechanism is stable, thereby increasing the output efficiency of the planetary gear mechanism and providing a noise attenuation function.

### [Technical Solution]

To solve the aforementioned technical problem, there is provided an actuator assembly for an electronic parking brake with multi-stage planetary gear mechanism, the planetary gear mechanism including a plurality of planetary gear carriers spaced apart from each other in axial direction of the planetary gear mechanism, each including a through-hole, a plurality of planetary gears inserted into planetary gear shafts arranged radially around the through-hole on one surface of the planetary gear carrier, a sun gear having a through-hole, the sun gear being engaged with a planetary gear of next stage on a side opposite to one surface of the planetary gear carrier on which the plurality of planetary gears is arranged, to allow the planetary gear carrier to rotate, a center pin extending in a direction of center axis of the entire planetary gear mechanism through the through-holes, and a housing which supports one end of the center pin, wherein a diameter of the through-hole is larger than a diameter of the center pin.

Furthermore, the plurality of planetary gears of the present disclosure may be fixed to the housing, and may be engaged with teeth inside a ring gear, the ring gear having the teeth on an inner circumference, and the plurality of planetary gears may revolve around the through-hole.

Furthermore, the actuator assembly for an electronic parking brake may be provided in which a drive gear is placed on top of the planetary gear mechanism of the present disclosure, the drive gear having a sun gear which rotates in engagement with a top planetary gear, the center pin extends through a through-hole formed in the sun gear and the drive gear, and a diameter of the through-hole is larger than a diameter of the center pin.

Furthermore, the center pin of the present disclosure may be separated in axial direction within the through-hole of the planetary gear carrier and the sun gear of the top planetary gear mechanism, to form a first separation center pin which is fixed by rotation with the through-hole of the drive gear, and a second separation center pin which is rotatably supported in the through-hole of the planetary gear carrier of the bottom planetary gear mechanism.

Furthermore, the center pin of the present disclosure may be separated in axial direction within the through-hole of the planetary gear carrier and the sun gear of the top planetary gear mechanism, to form a first separation center pin which is fixed by rotation with the through-hole of the drive gear, and a second separation center pin which is fixed by rotation in the through-hole of the planetary gear carrier of the bottom planetary gear mechanism.

Furthermore, a sun gear of a bottom planetary gear carrier of the planetary gear mechanism of the present disclosure may be an output shaft of the actuator assembly.

Furthermore, the actuator assembly for an electronic parking brake may be provided in which a drive gear is placed on top of the plurality of planetary gear carriers, the drive gear having a sun gear which rotates in engagement with the planetary gear of the top planetary gear mechanism, the center pin extends through a through-hole formed in the sun gear and the drive gear, and the through-hole of the drive gear and the center pin are connected and fixed to each other to allow the drive gear and the center pin to fix the rotation each other.

Furthermore, the drive gear of the present disclosure may receive power through an idle gear, and the planetary gear carrier and the sun gear of the planetary gear mechanism may be integrally formed.

Furthermore, the drive gear and the sun gear of the present disclosure may be integrally formed, the planetary gear carrier, the planetary gear and the ring gear may be made of sintered metal, and the ring gear may have a cylindrical shape with a uniform diameter.

### [Advantageous Effects]

The present disclosure can provide an actuator assembly for an electronic parking brake for stably maintaining the axial direction alignment of a planetary gear carrier.

Furthermore, the present disclosure can provide an actuator assembly for an electronic parking brake in which the entire planetary gear mechanism is made of sintered metal to improve durability and manufacturability.

### [Description of Drawings]

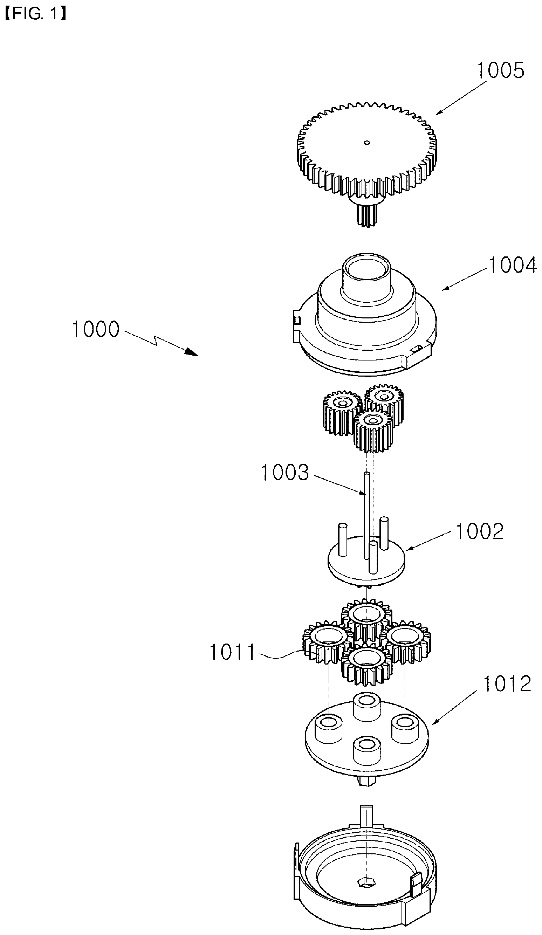

FIG. 1 is a schematic exploded perspective view of an actuator assembly according to the related art.
FIG. 2 is a perspective view schematically showing the outward appearance of an actuator according to a first embodiment of the present disclosure.
FIG. 3 is a schematic exploded perspective view of an actuator assembly according to a first embodiment of the present disclosure.
FIG. 4 is a schematic cross-sectional perspective view of a planetary gear mechanism of an actuator assembly, when assembled, according to a first embodiment of the present disclosure.
FIG. 5 is a schematic cross-sectional perspective view of an actuator assembly according to a first embodiment of the present disclosure.
FIG. 6 is a rear view of a drive gear part of an actuator assembly according to a first embodiment of the present disclosure.
FIG. 7 is a top view of a first planetary gear carrier of an actuator assembly according to a first embodiment of the present disclosure.
FIG. 8 is a top view of a second planetary gear carrier of an actuator assembly according to a first embodiment of the present disclosure.
FIG. 9 is a perspective view schematically showing a drive gear and a center pin of an actuator assembly according to a second embodiment of the present disclosure.
FIG. 10 is a schematic cross-sectional perspective view of an actuator assembly according to a second embodiment of the present disclosure.
FIG. 11 is a schematic perspective view of a planetary gear mechanism of an actuator assembly according to a third embodiment of the present disclosure.
FIG. 12 is a schematic cross-sectional view of the actuator assembly according to the third embodiment of the present disclosure shown in FIG. 11.

### [Best Mode]

Hereinafter, an actuator assembly for an electronic parking brake according to the present disclosure and its operation process will be described through the preferred embodiments of the present disclosure on the basis of the accompanying drawings.

Prior to the description, in many embodiments, the same element having the same configuration is typically described in an embodiment using the same reference numeral, and only different elements are described in the other embodiments.

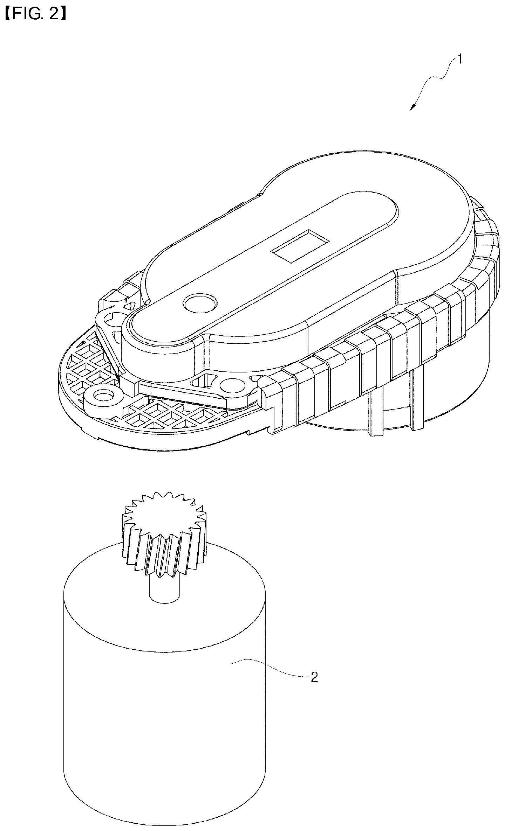

FIG. 2 is a perspective view schematically showing the outward appearance of an actuator according to a first embodiment of the present disclosure. As shown in FIG. 2, a driving means 2 which transmits power is connected below one side of the actuator assembly 1 according to an embodiment of the present disclosure to supply the power to the actuator assembly 1.

The driving means 2 may include a rotary electronic motor, and is electrically connected to manipulation means such as a switch or button in the vehicle and operates under the remote on/off control by the driver's manipulation of the switch or button.

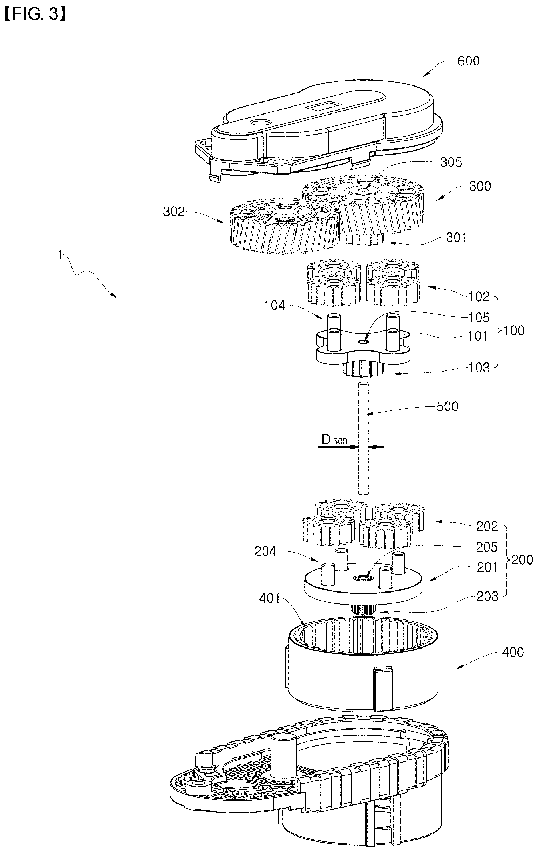

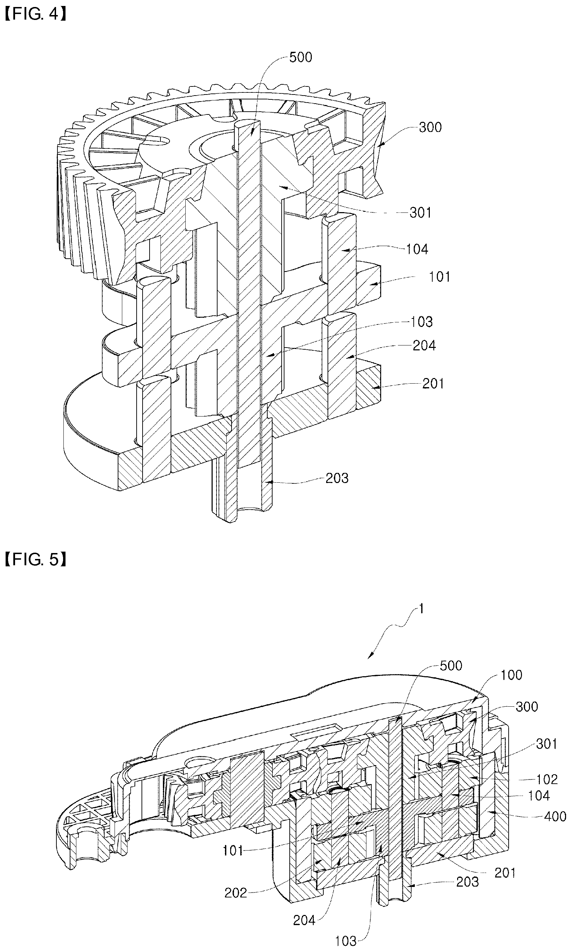

FIG. 3 is a schematic exploded perspective view of the actuator assembly according to the first embodiment of the present disclosure, and FIGS. 4 and 5 are a schematic cross-sectional perspective view of the planetary gear mechanism of the actuator assembly, when assembled, according to the first embodiment of the present disclosure, and a schematic cross-sectional perspective view of the actuator assembly.

As shown in FIGS. 3 to 5, an idle gear 302 that relays the power transmission from the driving means 2 to the actuator and a drive gear 300 that receives the relayed power from the idle gear 302 are placed at the upper part of the actuator assembly.

A sun gear 301 is connected to the lower surface of the drive gear 300, and with the rotation of the drive gear 300, the sun gear 301 also rotates. Furthermore, a through-hole 305 through which a center pin 500 can pass is formed at the center axis of the drive gear 300 and the sun gear 301.

A first planetary gear mechanism 100 and a second planetary mechanism 200 are arranged below the drive gear 300 in multi-stage manner, and the first planetary gear mechanism 100 and the second planetary mechanism 200 form the entire planetary gear mechanism.

The first planetary gear mechanism 100 includes a first planetary gear carrier 101, a plurality of first planetary gears 102, a plurality of first planetary gear shafts 104, and a first sun gear 103.

Specifically, the plurality of first planetary gear shafts 104 protrudes erect on the upper surface of the first planetary gear carrier 101, and the plurality of first planetary gears 102 is inserted into the first planetary gear shafts 104. The first planetary gear shafts 104 may be integrally formed with the first planetary gear carrier 101, and when needed, the separate first planetary gear shafts 104 may be manufactured such that they are fixed to the first planetary gear carrier 101 in press-fit manner.

Furthermore, the first sun gear 103 is mounted on the lower surface of the first planetary gear carrier 101, and with the rotation of the first planetary gear carrier 101, the first sun gear 103 also rotates. Similarly, the first sun gear 103 may be integrally formed with the first planetary gear carrier 101.

Furthermore, a through-hole 105 through which the center pin 500 can pass is formed at the center axis of the first planetary gear carrier 101 and the first sun gear 103.

The second planetary gear mechanism 200 includes a second planetary gear carrier 201, a plurality of second planetary gears 202, a plurality of second planetary gear shafts 204, and a sun gear 203.

Specifically, the plurality of second planetary gear shafts 204 protrudes erect on the upper surface of the second planetary gear carrier 201, and the plurality of second planetary gears 202 is inserted into the second planetary gear shafts 204. The second planetary gear shafts 104 may be also integrally formed with the second planetary gear carrier 201, or may be fixed to the second planetary gear carrier 201 in press-fit manner.

Furthermore, the second sun gear 203 is mounted on the lower surface of the second planetary gear carrier 201, and with the rotation of the second planetary gear carrier 201, the second sun gear 203 also rotates. Similarly, the second sun gear 203 may be integrally formed with the second planetary gear carrier 201. Furthermore, the second sun gear 203 becomes the final output shaft of the actuator assembly 1, and a parking brake (not shown) may be connected to the second sun gear 203. For example, the input shaft of the caliper of the disc parking brake is connected to the second sun gear 203.

Furthermore, a through-hole 205 through which the center pin 500 can pass is formed at the center axis of the second planetary gear carrier 201 and the second sun gear 203. Accordingly, the center pin 500 extends through the entire planetary gear mechanism via the through-hole 305 of the drive gear 300 and the sun gear 301, the through-hole 105 of the first planetary gear mechanism 100, and the through-hole 205 of the second planetary gear mechanism 200.

Furthermore, the top of the center pin 500 may be bearing supported on a housing 600 that covers the entire planetary gear mechanism.

The first planetary gear mechanism 100 and the second planetary mechanism 200 are received in multi-stage manner within a ring gear 400 having teeth 401 on the inner circumference, and the teeth 401 is engaged with the teeth of the first planetary gear 102 and the second planetary gear 202. Accordingly, the first planetary gear 102 and the second planetary gear 202 revolve around the center pin 500.

Hereinafter, a power transmission process of the actuator assembly according to the first embodiment of the present disclosure will be described with reference to the foregoing detailed description of the components of FIGS. 2 to 5.

The power inputted through the driving means 2 rotates the drive gear 305 through the idle gear 302. As the drive gear 305 rotates, the sun gear 301 mounted on the drive gear 305 rotates, and with the sun gear 301 being engaged with the first planetary gear 102 of the first planetary gear mechanism 100, the rotation of the sun gear 301 allows the first planetary gear 102 to rotate.

The first planetary gear 102 is placed on the first planetary gear shaft 104 and has the teeth that is engaged with the teeth 401 of the ring gear 400, and thus rotates on the first planetary gear shaft 104, and at the same time, revolves around the inner circumference of the ring gear 400. Accordingly, the rotation of the first planetary gear 102 allows the first planetary gear carrier 101 having the first planetary gear shaft 104 to rotate together.

As the first planetary gear carrier 101 rotates, the first sun gear 103 mounted on the first planetary gear carrier 101 rotates, and with the first sun gear 103 being engaged with the second planetary gear 202 of the second planetary gear mechanism 200, the rotation of the first sun gear 103 allows the second planetary gear 202 to rotate.

Similarly, the second planetary gear 202 is placed on the second planetary gear shaft 204 and has the teeth that is engaged with the teeth 401 of the ring gear 400, and thus rotates on the second planetary gear shaft 204, and at the same time, revolves around the inner circumference of the ring gear 400. Accordingly, the rotation of the second planetary gear 202 allows the second planetary gear carrier 201 having the second planetary gear shaft 204 rotates together, and as the second planetary gear carrier 201 rotates, the second sun gear 203 mounted on the second planetary gear carrier 201 rotates, by which the power is outputted.

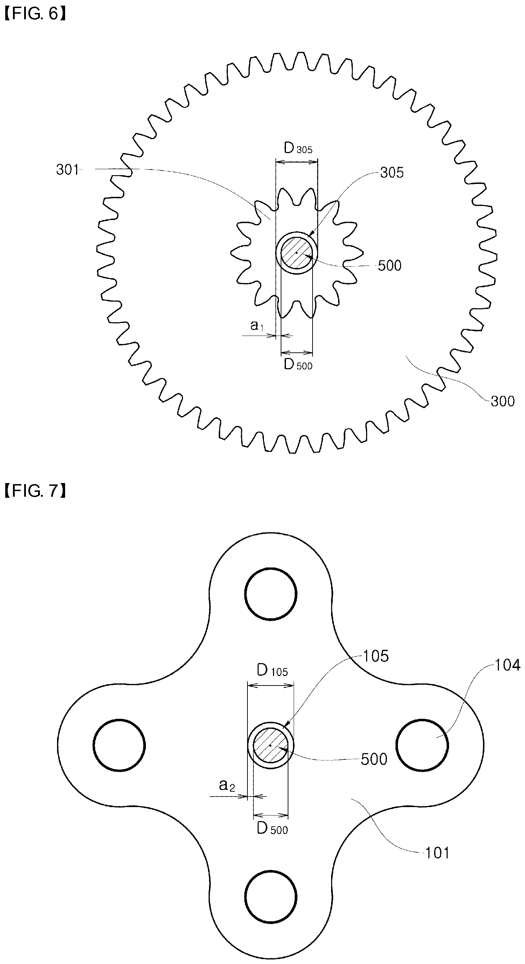

FIG. 6 is a rear view of the drive gear 300 of the actuator assembly, and the center pin 500 passes through the through-hole 305 of the drive gear 300 and the sun gear 301. As shown in FIG. 6, because the diameter D₃₀₅ of the through-hole 305 is larger than the diameter D₅₀₀ of the center pin 500, when the drive gear 300 rotates around the center pin 500, the drive gear 300 can rotate with clearance a₁ in the circumferential direction, and thus can rotate while maintaining backlash with the idle gear 302.

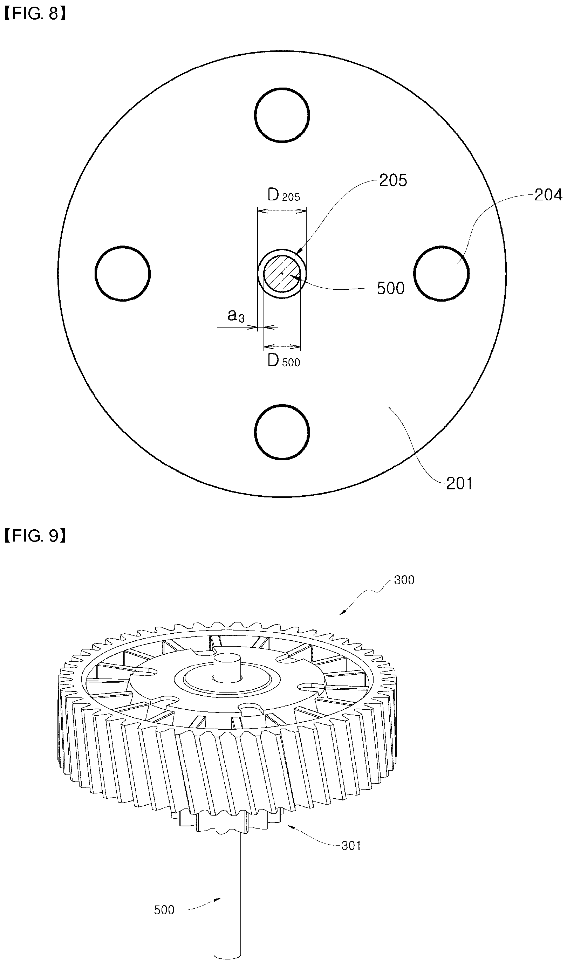

Furthermore, FIGS. 7 and 8 are top views of the first planetary gear carrier 101 and the second planetary gear carrier 201 respectively. Similar to the diameter D₃₀₅ of the through-hole 305 of the drive gear 300, the diameter D₁₀₅ of the through-hole 105 of the first planetary gear carrier 101 is larger than the diameter D₅₀₀ of the center pin 500, and the diameter D₂₀₅ of the through-hole 205 of the second planetary carrier 201 is larger than the diameter D₅₀₀ of the center pin 500.

Accordingly, because the first planetary gear carrier 101 and the second planetary gear carrier 201 are not fixed with the center pin 500 and each has clearance a₂, a₃ in the circumferential direction, even though the axis of the center pin 500 deviates, the axis of the first planetary gear carrier 101 and the second planetary gear carrier 201 does not deviate along with the center pin 500, and the first planetary gear 102 maintains backlash with the sun gear 301 and the second planetary gear 202 can also rotate while maintaining backlash with the first sun gear 103.

Accordingly, the first planetary gear mechanism 100 and the second planetary gear mechanism 200 can transmit power by rotating while maintaining alignment, thereby reducing a power loss, and at the same time, reducing noise caused by misalignment of the first planetary gear mechanism 100 and the second planetary gear mechanism 200.

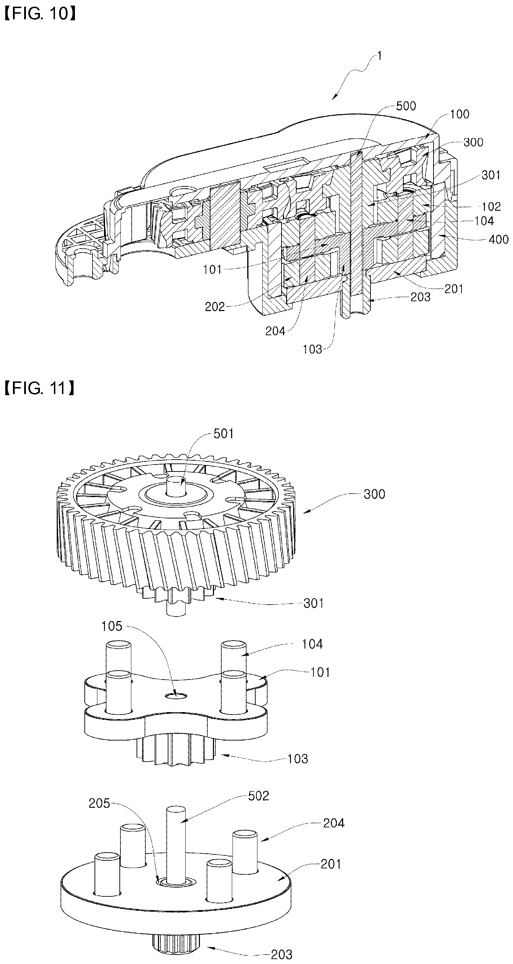

Meanwhile, FIGS. 9 and 10 schematically show a drive gear and a center pin of an actuator assembly for another embodiment that is different from the previous embodiment, and the resulting actuator assembly.

As shown in FIG. 9, in another embodiment, the drive gear 300 and the sun gear 301 may be manufactured into an integrated sintered product. Furthermore, the center pin 500 may be formed such that it is fixed to the drive gear 300 and the sun gear 301. That is, the diameter D₅₀₀ of the center pin 500 and the diameter D₃₀₅ of the through-hole 305 of the drive gear 300 and the sun gear 301 may be set to be almost the same. Accordingly, with the rotation of the drive gear 300, the center pin 500 can rotate together.

Still, in another embodiment, because of the first planetary gear mechanism 100 and the second planetary mechanism through which the center pin 500 passes with the clearance a₂, a₃, even though the center axis of the drive gear 300 deviates, the first planetary gear mechanism 100 and the second planetary gear mechanism 200 can transmit power by rotating while maintaining alignment in the axial direction.

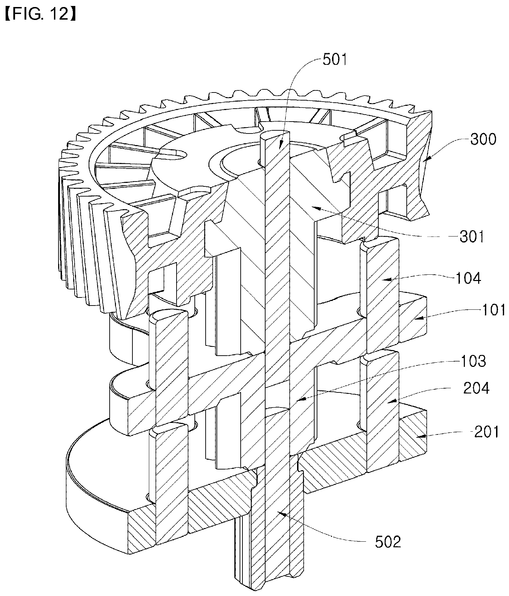

Meanwhile, FIGS. 11 and 12 schematically show a drive gear, a first planetary gear carrier, a second planetary gear carrier and a center pin of an actuator assembly for still another embodiment that is different from the previous embodiment, and the assembled actuator assembly.

As shown in FIG. 11, in still another embodiment, the center pin 500 is separated in the axial direction of the center pin 500 within the through-hole of the first planetary gear carrier 101 to form a first separation center pin 501 and a second separation center pin 502.

Accordingly, the first separation center pin 501 is only rotatably supported in the through-hole of the drive gear 300 and the sun gear 301 and the part above the through-hole 105 of the first planetary gear carrier 101. Furthermore, the second separation center pin 502 is rotatably supported in the part above the through-hole 105 of the first planetary gear carrier 101 and the first sun gear 103 and the through-hole 205 of the second planetary gear carrier 201.

Meanwhile, the first separation center pin 501 is fixed in the through-hole 305 of the drive gear 300 and the sun gear 301, and is fixed by rotation with the drive gear 300 and can rotate together, and the second separation center pin 502 may be rotatably supported in the through-hole 205 of the second planetary gear carrier 201.

Furthermore, the second separation center pin 502 may be mounted such that it is fixed by rotation in the through-hole 205 of the second planetary gear carrier 201, and in this case, the first separation center pin 501 and the second separation center pin 502 are fixed by rotation in the drive gear 300 and the second planetary gear carrier 201 respectively, and are only rotatably supported in the through-hole of the first planetary gear carrier 101 and the first sun gear 103.

Furthermore, the drive gear 300 and the sun gear 301 may be manufactured into an integrated sintered product. Furthermore, the center pin 500 may be formed such that it is fixed to the drive gear 300 and the sun gear 301. That is, the diameter D₅₀₀ of the center pin 500 and the diameter D₃₀₅ of the through-hole 305 of the drive gear 300 and the sun gear 301 may be set to be almost the same. Accordingly, with the rotation of the drive gear 300, the center pin 500 can rotate together.

Still, in still another embodiment, because of the first planetary gear mechanism 100 and the second planetary mechanism 200 through which the center pin 500 passes with the clearance a₂, a₃, even though the center axis of the drive gear 300 deviates, the first planetary gear mechanism 100 and the second planetary gear mechanism 200 can transmit power by rotating while maintaining alignment.

Meanwhile, in an embodiment of the present disclosure, the planetary gear carrier 101, 201, the planetary gear 102, 202, and the ring gear 400 may be made of sintered metal, and thus, durability is sufficiently ensured, and at the same time, it is easy to manufacture, and materials used to manufacture may vary as needed.

Those skilled in the art will appreciate that the present disclosure may be embodied in other specific forms without changing the technical spirit or essential feature of the present disclosure.

Therefore, the embodiments have been hereinabove described for illustration purposes only in all aspects, and it should be understood that the description is not intended to limit the present disclosure to the embodiments, and the scope of the present disclosure is defined by the appended claims rather than the detailed description, and it should be interpreted that the meaning and scope of the claims and all modifications and variations derived from the equivalent concept fall within the scope of the present disclosure.

### [Industrial Applicability]

The present disclosure can provide the actuator assembly for an electronic parking brake for stably maintaining the axial direction alignment of the planetary gear carrier and improving durability and manufacturability.

## Claims

1. An actuator assembly (1) for an electronic parking brake with multi-stage planetary gear mechanism (100, 200), the planetary gear mechanism (100, 200) comprising:
a plurality of planetary gear carriers (101, 201) spaced apart from each other in axial direction of the planetary gear mechanism (100, 200), each including a through-hole (105, 205);
a plurality of planetary gears (102 202), inserted into planetary gear shafts (104, 204) arranged radially around the through-hole (105, 205) on one surface of the planetary gear carrier (101, 201);
a sun gear (103, 203) having a through-hole, the sun gear (103, 203) being engaged with a planetary gear of next stage on a side opposite to one surface of the planetary gear carrier on which the plurality of planetary gears is arranged, to allow the planetary gear carrier to rotate;
a center pin (500) extending in a direction of center axis of the entire planetary gear mechanism (100, 200) through the through-holes (105, 205); and
a housing (600) which supports one end of the center pin (500),
wherein a diameter (D₁₀₅, D₂₀₅) of the through-hole is larger than a diameter (D₅₀₀) of the center pin.

2. The actuator assembly for an electronic parking brake according to claim 1, wherein the plurality of planetary gears (101, 201) is fixed to the housing (600), and is engaged with teeth (401) inside a ring gear (400), the ring gear (400) having the teeth (401) on an inner circumference, and
the plurality of planetary gears (101, 201) revolves around the through-hole (105, 205).

3. The actuator assembly for an electronic parking brake according to claim 1 or 2, wherein a drive gear (300) is placed on top of the planetary gear mechanism (100), the drive gear (300) having a sun gear (301) which rotates in engagement with a top planetary gear (102),
the center pin (500) extends through a through-hole (305) formed in the sun gear (301) and the drive gear (300), and
a diameter of the through-hole (305) is larger than a diameter of the center pin (500).

4. The actuator assembly for an electronic parking brake according to claim 3, wherein the center pin (500) is separated in axial direction within the through-hole of the planetary gear carrier (101) and the sun gear (103) of the top planetary gear mechanism (100), to form a first separation center pin (501) and a second separation center pin (502).

5. The actuator assembly for an electronic parking brake according to claim 1 or 2, wherein a sun gear (203) of a bottom planetary gear carrier (201) of the planetary gear mechanism (200) is an output shaft of the actuator assembly (1).

6. The actuator assembly for an electronic parking brake according to claim 1 or 2, wherein a drive gear (300) is placed on top of the plurality of planetary gear carriers (101), the drive gear (300) having a sun gear (301) which rotates in engagement with the planetary gear (102) of the top planetary gear mechanism (100),
the center pin (500) extends through a through-hole (305) formed in the sun gear (301) and the drive gear (300), and
the through-hole (305) of the drive gear (300) and the center pin (500) are connected and fixed to each other, to allow the drive gear (300) and the center pin (500) to fix the rotation each other.

7. The actuator assembly for an electronic parking brake according to claim 6, wherein the center pin (500) is separated in axial direction within the through-hole of the planetary gear carrier (101) and the sun gear (103) of the top planetary gear mechanism (100), to form a first separation center pin (501) which is fixed by rotation with the through-hole (305) of the drive gear (300), and a second separation center pin (502) which is rotatably supported in the through-hole (205) of the planetary gear carrier (201) of the bottom planetary gear mechanism (200) positioned on bottom of the planetary gear mechanism.

8. The actuator assembly for an electronic parking brake according to claim 6, wherein the center pin (500) is separated in axial direction within the through-hole of the planetary gear carrier (101) and the sun gear (103) of the top planetary gear mechanism (100), to form a first separation center pin (501) which is fixed by rotation with the through-hole (305) of the drive gear (300), and a second separation center pin (502) which is fixed by rotation in the through-hole (205) of the planetary gear carrier (201) of the bottom planetary gear mechanism (200) positioned on bottom of the planetary gear mechanism.

9. The actuator assembly for an electronic parking brake according to claim 1 or 2, wherein the drive gear (300) receives power through an idle gear (302).

10. The actuator assembly for an electronic parking brake according to claim 1 or 2, wherein the planetary gear carrier (101, 201) and the sun gear (103, 203) of the planetary gear mechanism (100, 200) are integrally formed.

11. The actuator assembly for an electronic parking brake according to claim 3, wherein the drive gear (300) and the sun gear (301) are integrally formed.

12. The actuator assembly for an electronic parking brake according to claim 1 or 2, wherein the planetary gear carrier (101, 201), the planetary gear (102, 202), and the ring gear (400) are made of sintered metal.

13. The actuator assembly for an electronic parking brake according to claim 2, wherein the ring gear (400) has a cylindrical shape with a uniform diameter.
